Europäisches Patentamt

European Patent Office

Office européen des brevets

(11) Publication number: **0 244 072 B1**

# EUROPEAN PATENT SPECIFICATION

(45) Date of publication of patent specification: **19.02.92**   (51) Int. Cl.⁵: **B60J 7/10**

(21) Application number: **87302253.7**

(22) Date of filing: **17.03.87**

(54) **An automobile roof structure.**

(30) Priority: **30.04.86 JP 100238/86**
   **30.04.86 JP 100239/86**

(43) Date of publication of application:
   **04.11.87 Bulletin 87/45**

(45) Publication of the grant of the patent:
   **19.02.92 Bulletin 92/08**

(84) Designated Contracting States:
   **DE FR GB**

(56) References cited:
   **DE-A- 1 455 743**
   **FR-A- 1 236 141**
   **US-A- 3 494 659**
   **US-A- 3 610 681**

(73) Proprietor: **TOYOTA JIDOSHA KABUSHIKI KAISHA**
   **1, Toyota-cho Toyota-shi**
   **Aichi-ken 471(JP)**

(72) Inventor: **Okamoto, Kazuo**
   **2-2-29, Miyagami-cho**
   **Toyota-shi Aichi-ken(JP)**
   Inventor: **Ohhashi, Hiroshi**
   **15, 93 Banchi, Aza 6 Chome Inaguma-cho**
   **Okazaki-shi Aichi-ken(JP)**
   Inventor: **Tatsumoto, Tokuichi**
   **304, Dai 1 Yamanoteen, 7-55, Yamanote**
   **Toyota-shi Aichi-ken(JP)**

(74) Representative: **Ben-Nathan, Laurence Albert et al**
   **Urquhart-Dykes & Lord 91 Wimpole Street**
   **London W1M 8AH(GB)**

Rank Xerox (UK) Business Services

## Description

The present invention relates to an automobile roof structure which includes a detachable roof section and a windshield frame. The detachable roof section is secured selectively to the windshield frame by a simple fastening means. More particularly, the present invention relates to improvements in a fastening means for fastening the detachable roof section to the windshield frame. The simple fastening means of the present invention obviates the installation problems encountered with known devices.

The U.S. Patent US-A-3,610,681 discloses an automobile roof structure which includes a detachable roof section, fastening means for fastening the detachable roof section to a windshield frame and to a roll bar.

Said fastening means includes a tension-locking device, and clamping locks, respectively.

However, this conventional automobile roof structure is complex and includes many components.

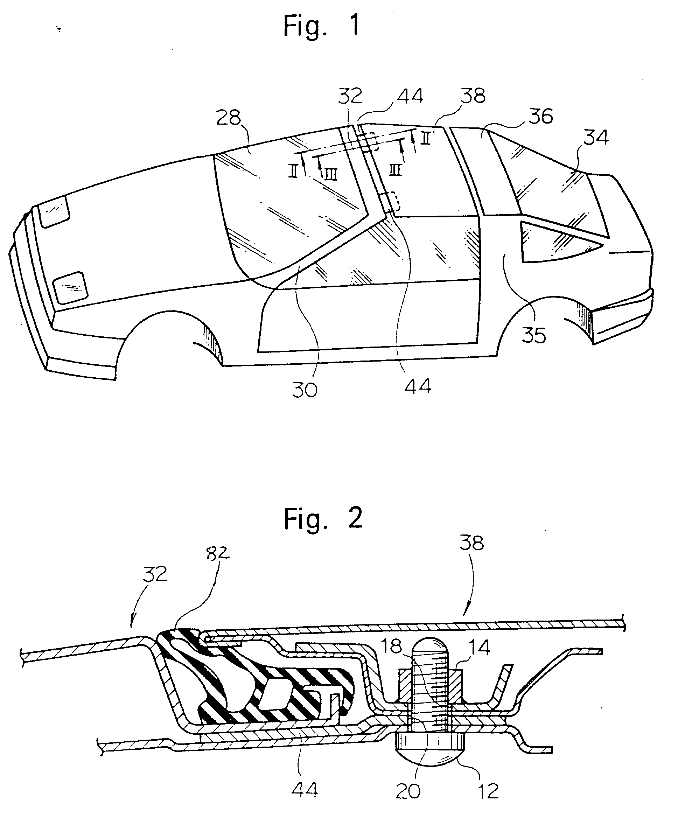

Figures 1 to 4 of the accompanying drawings illustrate an automobile roof structure which constitutes an in-house state of the art.

The present invention was developed in view of the foregoing background and to overcome the foregoing drawbacks. It is accordingly an object of the present invention to provide an automobile roof structure which includes a detachable roof section and a simple fastening means. Another object of the present invention is the provision of a simple structure for securely fastening the detachable roof section to a fixed roof section of a vehicle.

The automobile roof structure of the present invention includes a detachable roof section, a fixed roof section and fastening means for fastening respective opposite edges of the detachable roof section to adjacent fixed roof sections.

The fixed roof section includes a bracket extending from the fixed roof section.

The detachable roof section is selectively mounted on the bracket of the fixed roof section. The detachable roof section includes an aperture.

One fastening means includes guiding means, a first engaging member and a second engaging member.

The guiding means is mounted on the bracket of the fixed roof section and the guiding means includes a tapered hole therewithin. The tapered hole includes an upper edge and a lower edge. The inner diameter of the lower edge is greater than the inner diameter of the upper edge.

The first engaging means is secured to the detachable roof section and is located in the vicinity of the aperture of the detachable roof section.

The second engaging member is selectively inserted into the tapered hole of the guiding means and the aperture of the detachable roof section. The second engaging member includes an engaging portion and a tapered surface and selectively engages with the first engaging member. The tapered surface includes a first outer diameter located in the vicinity of the engaging portion and a second outer diameter located apart from the engaging portion. The first outer diameter is less than the second outer diameter.

Accordingly, even when a center line of the tapered hole of the guiding means is not aligned with a center line of the aperture of the detachable roof section, the second engaging member biases the detachable roof section toward the proper position by threading the second engaging member into the first engaging member.

The above objects, features and advantages of the present invention will become more apparent from the description of the invention which follows, taken in conjunction with the accompanying drawings, wherein like reference numerals denote like elements:

FIG. 1 is a perspective view of a vehicle including a first fastening means;

FIG. 2 is a cross-sectional view of the first fastening means taken along the line II-II in FIG. 1, wherein a detachable roof section is positioned properly, and the detachable roof section is secured to a front roof section by a first bolt of the first fastening means;

FIG. 3 is a cross-sectional view of the first fastening means taken along the line III-III in FIG. 1, wherein the detachable roof section is positioned properly;

FIG. 4 is a cross-sectional view of the first fastening means taken along the line III-III in FIG. 1, wherein the detachable roof section is not positioned properly;

FIG. 5 is a perspective view of a vehicle including second fastening means according to the present invention;

FIG. 6 is a cross-sectional view of the second fastening means taken along the line VI-VI in FIG. 5, wherein the detachable roof section is positioned properly and the detachable roof section is secured to the front roof section by a second bolt of the second fastening means according to the present invention;

FIG. 7 is a cross-sectional view of the second fastening means taken along the line VI-VI in FIG. 5, wherein the detachable roof section is not positioned properly;

FIG. 8 is a cross-sectional view of a second embodiment of the second fastening means taken along the line VI-VI in FIG. 5, wherein the detachable roof section is positioned properly,

and the detachable roof section is secured to the front roof section by the second fastening means;

FIG. 9 is a cross-sectional view of the second embodiment taken along the line VI-VI in FIG. 5, wherein the second bolt is biased toward a bottom flange of an under cover;

FIG. 10 is a cross-sectional view of a third embodiment of the second fastening means taken along the line VI-VI in FIG. 5, wherein the detachable roof section is positioned properly, and the detachable roof section is secured to the front roof section by the second fastening means; and

FIG. 11 is a perspective view of a holding means of the third embodiment.

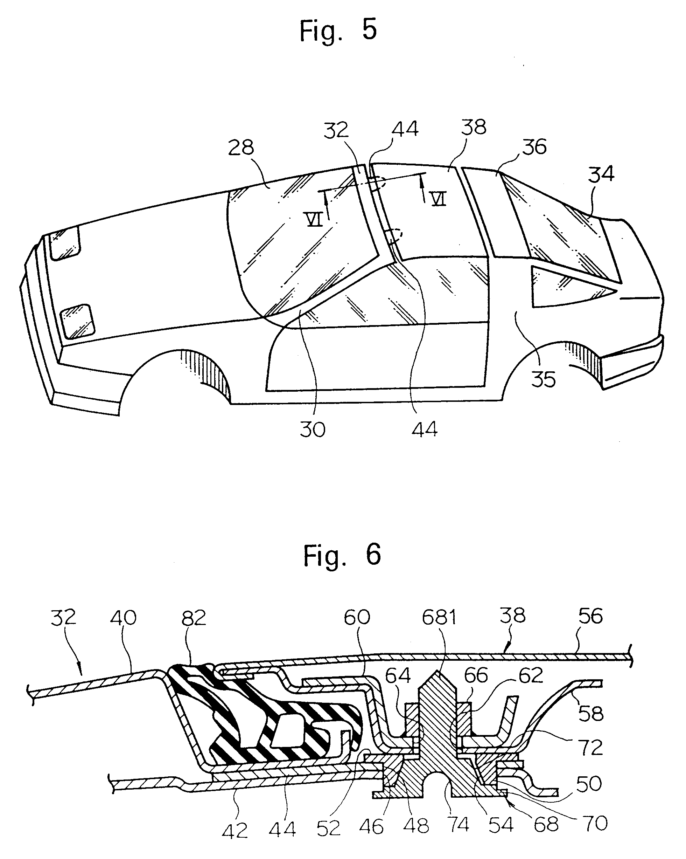

The present invention will be described in detail with reference to the accompanying drawings of which figures 5 to 11 illustrate preferred different embodiments according to the present invention.

Referring to Figure 1, a vehicle includes a windshield 28, a front pillar 30, a front roof section 32, a detachable roof section 38, a rear roof section 36, a center pillar 35 and a rear window 34. The front pillar 30 is connected and secured to the front roof section 32. The front pillar 30 and the front roof section 32 surround the windshield 28 (i.e., the front pillar 30 and the front roof section 32 constitute a windshield frame). The rear roof section 36 is connected to the center pillar 35. The rear roof section 36 and the center pillar 35 constitute a roll bar.

The detachable roof section 38 is positioned between the front roof section 32 and the rear roof section 36, and the detachable roof section 38 covers a passenger compartment. The detachable roof section 38 includes front and rear portions.

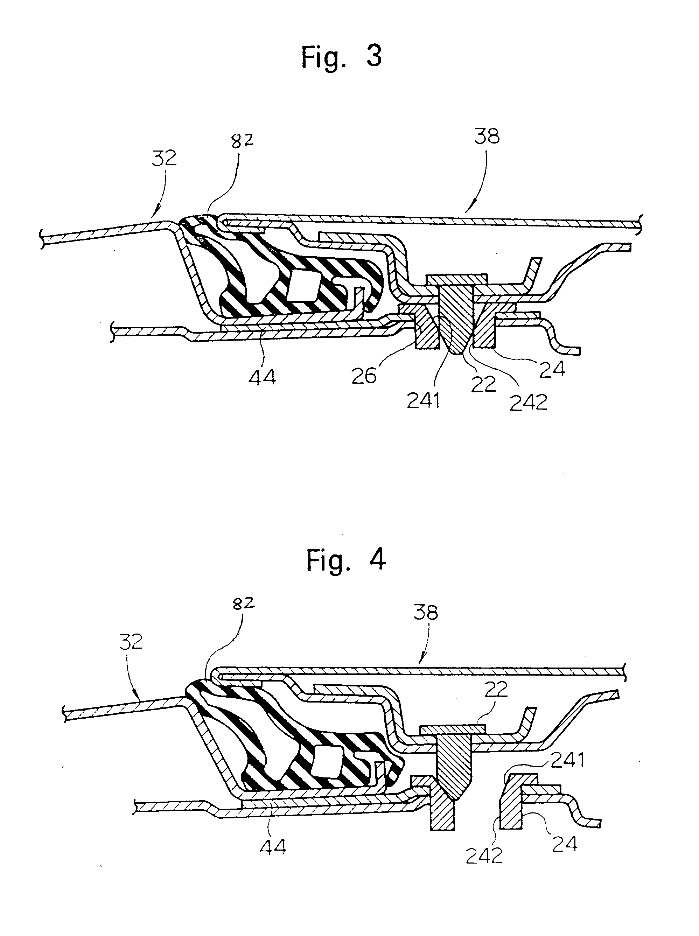

As shown in Figures 2 and 3, the front portion of the detachable roof section 38 is selectively mounted on the front roof section 32, and the detachable roof section 38 is selectively secured to the front roof section 32. The front portion of the detachable roof section 38 includes a plurality of first holes 18 and a plurality of projections 22. The first hole 18 is located apart from the projection 22 in the lateral direction of the vehicle. A nut 14 is secured to the front portion of the detachable roof section 38. A center line of the nut 14 corresponds to a center line of the first hole 18 of the detachable roof section 38.

The front roof section 32 includes a plurality of brackets 44 which project rearwardly in the longitudinal direction of the vehicle. Each bracket 44 includes second and third holes 20 and 26 therewithin. The second hole 20 of each bracket 44 corresponds to the first hole 18 of the detachable roof section 38. In a normal condition, the third hole 26 of the bracket 44 corresponds to the projection 22 of the detachable roof section 38. A guiding member 24 is inserted into the third hole 26. The guiding member 24 includes a guiding surface 241 and a positioning hole 242.

The first holes 18, the nuts 14 and the projections 22 of the detachable roof section 38, the second holes 20 and the guiding members 24 of the front roof section 32 and the bolts 12 constitute a first fastening means.

In a normal securing condition, as shown in Figures 2 and 3, a bolt 12 is inserted into the second and first holes 20 and 18, and the bolt 12 engages with the nut 14. Simultaneously, the projection 22 is positioned within the positioning hole 242. Accordingly, the detachable roof section 38 and the front roof section 32 form a substantially flush surface, and a space defined between the detachable roof section 38 and the front roof section 32 is effectively sealed by a weather strip 82.

However, when due to manufacturing error, the projection 22 of the detachable roof section 38 is not aligned with the positioning hole 242 of the guiding member 24, the projection 22 of the detachable roof section 38 is located on the guiding surface 241 of the guiding member 24. Accordingly, the detachable roof section 38 projects from the front roof section 32, and sealing effect between the detachable roof section 38 and the front roof section 32 is deteriorated.

Thus, in order to prevent the detachable roof section 38 from projecting from the front roof section 32, a first distance, defined between the projection 22 and the first hole 18 of the detachable roof section 38, must be the same as a second distance defined between the second hole 20 of the front roof section 32 and the positioning hole 242 of the guiding member 24.

However, when due to manufacturing error, the first distance is not the same as the second distance, the detachable roof section 38 might not be secured to the front roof section 32 or the sealing effect between the detachable roof section 38 and the front roof section 32 might be deteriorated.

Figures 5 through 7 show a second fastening means, provided between the detachable roof section 38 and the front roof section 32, according to the present invention.

As shown in Figure 6, the second fastening means includes guiding means 50 and a second bolt 68. The guiding means 50 is inserted into a fourth hole 46 defined within a pillar inner panel 42 and a fifth hole 48 defined within a bracket 44. The guiding means 50 includes a flange 52 secured to the bracket 44 by welding. The guiding means 50 includes a tapered hole 54 (i.e., the inner diameter of the lower edge of tapered hole 54 is larger than the inner diameter of the upper edge of tapered hole 54) and the tapered hole 54 includes a smooth surface thereon. A front portion of the bracket 44 is sandwiched between and secured to the pillar inner panel 42 and a roof header outer panel 40. The pillar inner panel 42 is connected to the front pillar 30. The roof header outer panel 40 constitutes a rear portion of the front roof section 32. A weather strip 82 is mounted on a rear portion of the roof header outer panel 40. The bracket 44 extends rearwardly in the longitudinal direction of the vehicle. The bracket 44 is located vertically below an outer surface of the front roof section 32.

The detachable roof section 38 includes a roof outer panel 56 and a roof inner panel 58.

A front edge of the roof outer panel 56 is secured to a front edge of the roof inner panel 58. The weather strip 82 is sandwiched between the roof header outer panel 40 and the front edge of the roof outer panel 56, as a result, a space defined between the roof header outer panel 40 and the front edge of the roof outer panel 56, is effectively sealed.

A portion of the roof inner panel 58 projects downwardly and includes a sixth hole 62. A reinforcement 60 is secured to the projecting portion of the roof inner panel 58, and includes a seventh hole 64 corresponding to the sixth hole 62 of the roof inner panel 58. A nut 66 is welded on the reinforcement 60, and the nut 66 includes a threaded hole. The nut 66 functions as a first engaging member. The center line of the threaded hole of the nut 66 is the substantially aligned with the center line of the sixth hole 62 of the roof inner panel 58.

The second bolt 68 of the second fastening means includes a threaded portion 681 and a head portion 68. The head portion 68 includes a smooth tapered surface 72, a flange 70 and a recess 74. The second bolt 68 functions as a second engaging member. The tapered surface 72 includes a small diameter edge and a large diameter edge. The outer diameter of the small diameter edge of the tapered surface 72 of the second bolt 68 is smaller than the inner diameter of the upper edge of the tapered hole 54 of the guiding means 50. The outer diameter of the large diameter edge of the tapered surface 72 of the second bolt 68 is smaller than the inner diameter of the lower edge of the tapered hole 54 of the guiding means 50. The small diameter edge of the tapered surface 72 is located in the vicinity of the threaded portion 681 of the second bolt 68. The large diameter edge of the tapered surface 72 is located apart from the threaded portion 681. The flange 70 extends outwardly and is located in the vicinity of the large diameter portion.

When the threaded portion 681 of the second bolt 68 engages with and is threaded into the threaded hole of the nut 66, the guiding means 50 is clamped between the flange 70 of the second bolt 68 and the projecting portion of the roof inner panel 68. In this condition, a portion of the tapered surface 72 of the second bolt 68 is not in contact with a portion of the tapered hole 54 of the guiding means 50. A recess 74 is defined within the head portion 68, and when the second bolt 68 is to be threaded into or out of the nut 66, a coin or a screw driver is inserted into the recess 74.

The process of fastening the detachable roof section 38 to the front roof section 32 is disclosed hereinafter.

First, the detachable roof section 38 is mounted on the front and rear roof sections 32 and 36 of the vehicle.

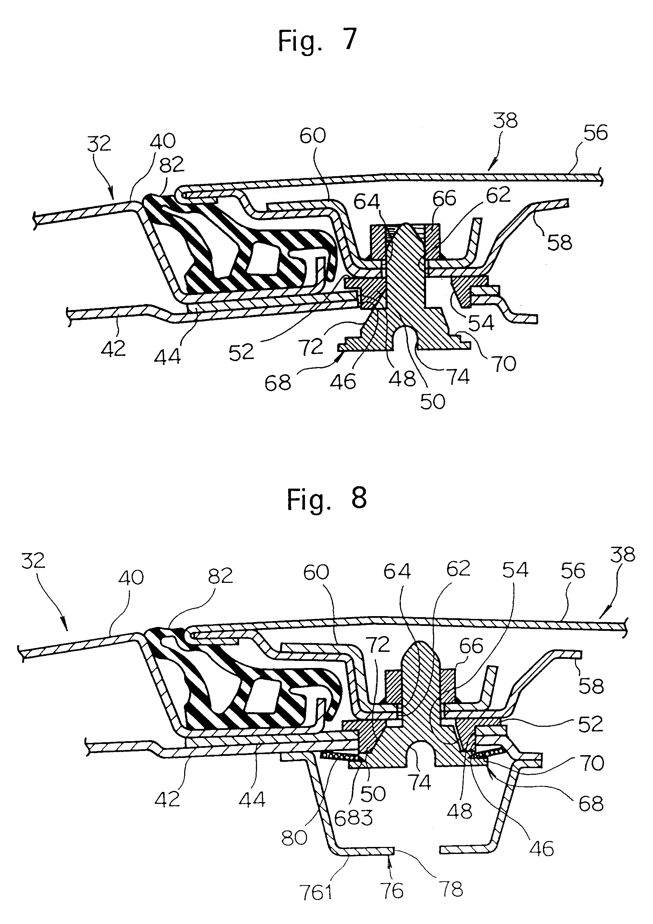

As shown in Figure 7, when the detachable roof section 38 is not positioned properly, the center line of the guiding means 50 is located apart from the center line of the second bolt 68.

However, when the second bolt 68 is threaded into the nut the tapered surface 72 of the second bolt 68 contacts with the tapered hole 54 of the guiding means 50.

As a result, the second bolt 68 forces the detachable roof section 38 to move toward the proper position.

Therefore, the detachable roof section 38 is positioned properly and the space defined between the front edge of the detachable roof section 38 and the front roof section 32, is securely sealed.

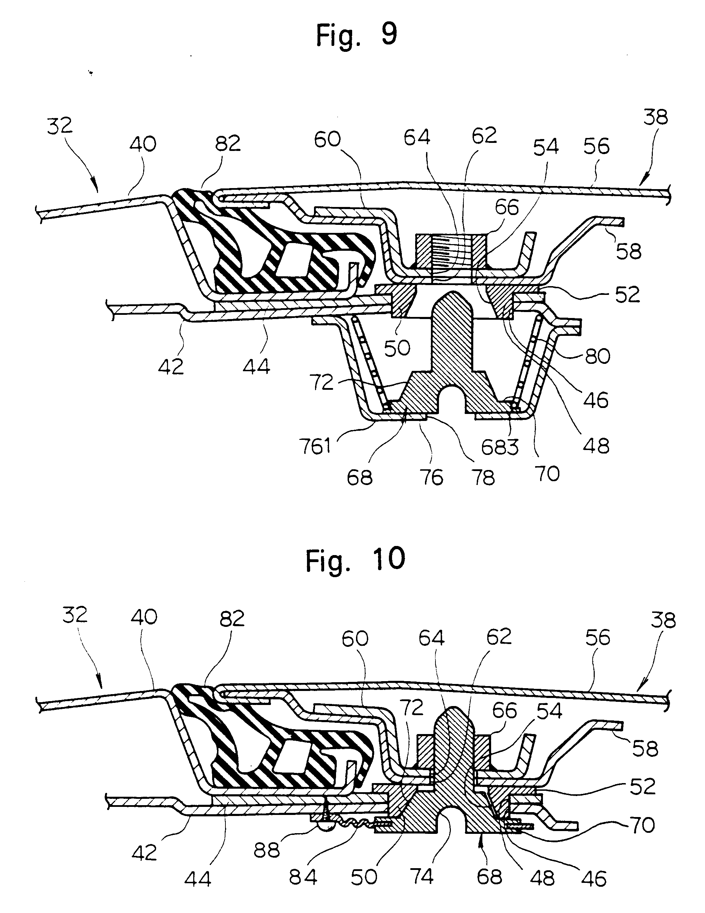

Figures 8 and 9 show a second embodiment of the second fastening means provided between the detachable roof section 38 and the front roof section 32.

The second embodiment is the substantially similar to a first embodiment shown in Figures 5 through 7.

However, the second embodiment includes an under cover 76 and holding means 80. The under cover 76 is secured to a lower surface of the pillar inner panel 42. The under cover includes a bottom flange 761 and an aperture 78 defined within the bottom flange 761. The center line of the aperture 78 corresponds to the center line of the tapered hole 54 of the guiding means 50. The aperture 78 has a smaller inner diameter than the inner diameter of the upper edge of the tapered hole 54.

Accordingly, even when the second bolt 68 is not engaged with the nut 66, the second bolt 68 can not drop out from the under cover 76.

Further, the holding means 80 is preferably a conical spring. One end of the conical spring 80 is fixed to the lower surface of the pillar inner panel 42 and the other end of the conical spring 80 is inserted into and secured to a V-shaped groove 683 defined within the flange 70 of the second bolt 68. As shown in Figure 9, the conical spring 80 biases the second bolt 68 toward the bottom flanges 761 of the under cover 76. Furthermore, the entire flange 70 of the second bolt 68 is biased uniformly downwardly by the conical spring 80.

Accordingly, even when the second bolt 68 is not engaged with the nut 66, the second bolt 68 does not move in the under cover 76. As a result, the second bolt 68 does not make any noise in the under cover 76.

Further, the conical spring 80 maintains the position of the second bolt 68 within the under cover 76. Thus, the second bolt 68 remains aligned with the nut 66, so that it is very easy for an operator to make the second bolt 68 engage with the nut 66 of the detachable roof section 38.

Moreover, the second bolt 68 is covered by the under cover 76, so that the appearance is improved.

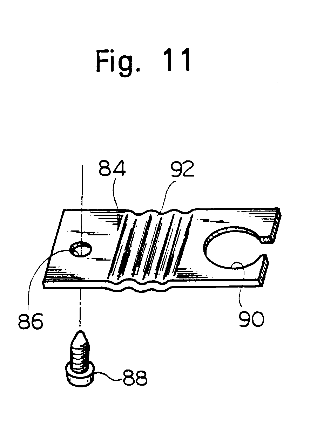

Figure 10 and 11 show a third embodiment of the second fastening means. The third embodiment is substantially similar to the second embodiment shown in Figures 8 and 9.

However, the third embodiment uses a plate spring 84 as the holding means, instead of the conical spring 80 of the second embodiment.

As shown in Figure 11, the plate spring 84 includes an aperture 86, an engagement recess 90 and a corrugated portion 92.

As shown in Figure 10, the plate spring 84 is secured to the pillar inner panel 42 by a screw 88. The second bolt 68 is inserted into and engaged with an engagement recess 90 of the plate spring 84. The corrugated portion 92 of the plate spring 84 allows the second bolt 68 to move in the vertical and longitudinal direction of the vehicle.

As described herein, the present invention overcomes the shortcomings of the known art by providing an automobile roof structure which includes a detachable roof section, a fixed roof section and fastening means including guide means, a first engaging member and a second engaging member.

While the present invention has been described in its preferred embodiments, it is to be understood that the invention is not limited thereto, and may be otherwise embodied within the scope of the following claims.

## Claims

1. An automobile roof structure comprising:
   a fixed roof section (32);
   a bracket (44) extending from said fixed roof section (32);
   a detachable roof section (38) selectively mounted on the bracket (44), said detachable roof section having an aperture (64);
   fastening means for fastening an edge of said detachable roof section (38) to said bracket (44) and comprising guiding means (50), a first engaging member (66) and a second engaging member (68);
   further fastening means for fastening an opposite edge of said detachable roof section (38) to a further fixed roof section (36);
   said guiding means (50) being mounted on the bracket (44) of said fixed roof section, and having a tapered hole (54) therewithin, the tapered hole having an upper edge having an inner diameter and a lower edge having an inner diameter, the inner diameter of the lower edge being greater than the inner diameter of the upper edge;
   said first engaging member (66) located adjacent the aperture (64) of said detachable roof section (38); and
   said second engaging member (68) being selectively inserted into the tapered hole (54) of the guide means (50) and the aperture (64) of the detachable roof section, the second engaging member having an engaging portion (681) and a tapered surface (72), the engaging portion (681) of the second engaging member (68) selectively engaging with the first engaging member (66), the tapered surface (72) having a first outer diameter and a second outer diameter, the first outer diameter being less than the second outer diameter, the first outer diameter being located adjacent the engaging portion (681), the second outer diameter located apart from the engaging portion;
   whereby when a center line of the tapered hole (54) of the guiding means is not aligned with a center line of the aperture (64) of the detachable roof section, the second engaging member (68) forces the detachable roof section to move toward a proper position upon threading of the second engaging member into the first engaging member.

2. The automobile roof structure as claimed in Claim 1, wherein the lower edge of the guiding means (50) is located vertically below the upper edge of the guide means (50).

3. The automobile roof structure as claimed in claim 1, wherein the tapered hole (54) of the guiding means (50) includes a smooth inner surface.

4. The automobile roof structure as claimed in claim 1, wherein the tapered surface (72) of the second engaging member (68) includes a smooth outer surface.

5. The automobile roof structure as claimed in claim 1, wherein the second engaging member (68) further includes a flange (70), the tapered surface (72) of the second engaging member (68) is located adjacent the engaging portion (681), and the flange (70) is located apart from the engaging portion (681).

6. The automobile roof structure as claimed in claim 5, wherein the flange (70) extends outwardly from the second engaging member (68).

7. The automobile roof structure as claimed in claim 1, wherein the first outer diameter of the second engaging member (68) is less than the inner diameter of the upper edge of the guiding means (50), and the second outer diameter of the second engaging member (68) is less than the inner diameter of the lower edge of the guiding means (50).

**Revendications**

1. Une structure de toit d'automobile comportant:
   - une partie de toit fixe (32);
   - une patte (44) s'étendant à partir de ladite partie de toit fixe (32);
   - une partie de toit amovible (38) montée de façon sélective sur la patte (44), ladite partie de toit amovible présentant une ouverture (64);
   - des moyens de fixation pour fixer un bord de ladite partie de toit amovible (38) à ladite patte (44) et comportant des moyens de guidage (50), un premier organe de contact (66) et un second organe de contact (68);
   - d'autres moyens de fixation pour fixer un bord opposé de ladite partie de toit amovible (38) à une autre partie de toit fixe (36);
   - lesdits moyens de guidage étant montés sur la patte (44) de ladite partie de toit fixe, et présentant un trou conique (54), ce dernier présentant un bord supérieur ayant un diamètre intérieur et un bord inférieur ayant un diamètre intérieur, le diamètre intérieur du bord inférieur étant plus grand que le diamètre intérieur du bord supérieur;
   - ledit premier organe de contact (66) étant situé adjacent par rapport à l'ouverture (64) de ladite partie de toit amovible (38); et
   - ledit second organe de contact (68) étant sélectivement inséré dans le trou conique (54) des moyens de guidage (50) et dans l'ouverture (64) de la partie de toit amovible, le second organe de contact présentant une partie de contact (681) et une surface conique (72), la partie de contact (681) du second organe de contact (68) venant en contact sélectivement avec le premier organe de contact (66), la surface conique (72) présentant un premier diamètre intérieur et un second diamètre extérieur, le premier diamètre extérieur étant inférieur au second diamètre extérieur, le premier diamètre extérieur étant situé adjacent à la partie de contact (681) tandis que le second diamètre extérieur est situé à distance de celle-ci;
   - de manière que lorsqu'un axe central du trou conique (54) des moyens de guidage n'est pas aligné avec un axe central de l'ouverture (64) de la partie de toit amovible, le second organe de contact (68) oblige la partie de toit amovible à se déplacer vers une position appropriée par vissage du second organe de contact dans le premier organe de contact.

2. La structure de toit d'automobile telle que revendiquée dans la revendication 1, dans laquelle le bord inférieur des moyens de guidage (50) est situé verticalement au-dessous du bord supérieur du moyen de guidage (50).

3. La structure de toit d'automobile telle que revendiquée dans la revendication 1, dans laquelle le trou conique (54) des moyens de guidage (50) comprend une surface interne lisse.

4. La structure de toit d'automobile telle que revendiquée dans la revendication 1, dans laquelle la surface conique (72) du second organe de contact (68) comporte une surface externe lisse.

5. La structure de toit d'automobile telle que revendiquée dans la revendication 1, dans laquelle le second organe de contact (68) comporte en outre une bride (70), la surface conique (72) du second organe de contact (68) est située adjacente à la partie de contact (681) tandis que la bride (70) est située à distance de la partie de contact (681).

6. La structure de toit d'automobile telle que revendiquée dans la revendication 5, dans laquelle la bride (70) s'étend vers l'extérieur à partir du second organe de contact (68).

7. La structure de toit d'automobile telle que revendiquée dans la revendication 1, dans laquelle le premier diamètre extérieur du second organe de contact (68) est inférieur au diamètre intérieur du bord supérieur des moyens de guidage (50), et le second diamètre extérieur du second organe de contact (68) est inférieur au diamètre intérieur du bord inférieur des moyens de guidage (50).

## Patentansprüche

1. Kraftfahrzeugdachkonstruktion, **gekennzeichnet durch** ein festes Dachteil (32),

   einen von dem festen Dachteil vorstehenden Befestigungsarm (44),

   ein wahlweise an dem Befestigungsarm (44) angebrachtes abnehmbares Dachteil (38), wobei das abnehmbare Dachteil eine Öffnung (64) aufweist,

   Befestigungsmittel zum Befestigen einer Kante des abnehmbaren Dachteils (38) an dem Befestigungsarm (44), welche Führungsmittel (50), einen ersten Eingriffskörper (66) und einen zweiten Eingriffskörper (68) umfassen,

   weitere Befestigungsmittel zum Befestigen einer gegenüberstehenden Kante des abnehmbaren Dachteils (38) an einem weiteren festen Dachteil (36),

   wobei die Führungsmittel (50) an dem Befestigungsarm (44) des festen Dachteils angebracht sind und ein konisch sich verjüngendes Loch (54) in sich aufweisen, das konisch sich verjüngende Loch einen oberen Rand mit einem inneren Durchmesser und einen unteren Rand mit einem inneren Durchmesser hat, der innere Durchmesser des unteren Randes größer als der innere Durchmesser des oberen Randes ist,

   wobei der erste Eingriffskörper (66) zu der Öffnung (64) des abnehmbaren Dachteils (38) angrenzend liegt, und

   wobei der zweite Eingriffskörper (68) wahlweise in das konisch sich verjüngende Loch (54) der Führungsmittel (50) und der Öffnung (64) des abnehmbaren Dachteils eingesetzt ist, der zweite Eingriffskörper einen Eingriffsteil (681) und eine konisch sich verjüngende Oberfläche (72) aufweist, der Eingriffsteil (681) des zweiten Eingriffkörpers (68) wahlweise mit dem ersten Eingriffskörper (66) in Eingriff steht, die konisch sich verjüngende Oberfläche (72) einen ersten äußeren Durchmesser und einen zweiten äußeren Durchmesser aufweist, der erste äußere Durchmesser kleiner ist als der zweite äußere Durchmesser, der erste äußere Durchmesser angrenzend zu dem Eingriffsteil (681) liegt, der zweite äußere Durchmesser entfernt von dem Eingriffsteil liegt,

   wodurch, wenn eine Mittellinie des sich konisch verjüngenden Lochs (54) der Führungsmittel nicht mit einer Mittellinie der Öffnung (64) des abnehmbaren Dachteils fluchtet, der zweite Eingriffskörper (68) das abnehmbare Dachteil beim Hineinschrauben des zweiten Eingriffkörpers in den ersten Eingriffskörper zu einer Bewegung in eine geeignete Lage hin zwingt.

2. Kraftfahrzeugdachkonstruktion nach Anspruch 1, dadurch gekennzeichnet, daß die untere Kante der Führungsmittel (50) vertikal unterhalb der oberen Kante der Führungsmittel (50) liegt.

3. Kraftfahrzeugdachkonstruktion nach Anspruch 1, dadurch gekennzeichnet, daß das sich konisch verjüngende Loch (54) der Führungsmittel (50) eine glatte innere Oberfläche aufweist.

4. Kraftfahrzeugdachkonstruktion nach Anspruch 1, dadurch gekennzeichnet, daß die sich konisch verjüngende Oberfläche (72) des zweiten Eingriffkörpers (68) eine glatte äußere Oberfläche aufweist.

5. Kraftfahrzeugdachkonstruktion nach Anspruch 1, dadurch gekennzeichnet, daß der zweite Eingriffskörper (68) weiterhin einen Flansch (70) aufweist, die konisch sich verjüngende Oberfläche (72) des zweiten Eingriffkörpers (68) angrenzend zu dem Eingriffsteil (681) liegt und der Flansch (70) entfernt von dem Eingriffsteil (681) liegt.

6. Kraftfahrzeugdachkonstruktion nach Anspruch 5, dadurch gekennzeichnet, daß der Flansch (70) sich von dem zweiten Eingriffskörper (68) nach auswärts erstreckt.

7. Kraftfahrzeugdachkonstruktion nach Anspruch 1, dadurch gekennzeichnet, daß der erste äußere Durchmesser des zweiten Eingriffkörpers (68) kleiner als der innere Durchmesser des oberen Rands der Führungsmittel (50) ist und der zweite äußere Durchmesser des zweiten Eingriffkörpers (68) kleiner als der innere Durchmesser des unteren Rands der Führungsmittel (50) ist.

Fig. 1

Fig. 2

## Fig. 3

## Fig. 4

Fig. 5

Fig. 6

Fig. 7

Fig. 8

# Fig. 9

# Fig. 10

## Fig. 11